# EUROPEAN PATENT SPECIFICATION

(11) **EP 1 185 817 B1**
(45) Date of publication and mention of the grant of the patent: **31.03.2004**
(21) Application number: 00906771.1
(22) Date of filing: 27.01.2000
(51) Int. Cl.: F16L 41/00

(54) **INTERSECTION DEVICE FOR DUCT**
VORRICHTUNG ZUM KREUZEN VON LEITUNGEN
DISPOSITIF DE CROISEMENT DE CONDUITE

(30) Priority: 02.06.1999 NO 992681
(43) Date of publication of application: 13.03.2002
(73) Proprietor: KRO Produksjon AS, 0468 Oslo (NO)
(72) Inventor: LARSEN, Bjorn, Tore, N-2006 Lovenstad (NO)
(74) Representative: Weise, Reinhard, Dipl.-Ing.
(86) International application number: PCT/NO2000/000023
(87) International publication number: WO 2000/075555

(56) References cited:
- DE-C- 642 407
- US-A- 3 510 156

## Description

The invention relates to a device for forming a junction between a main duct element and an intersecting duct element, where the main duct element is used for fluid flow substantially in one direction, and where at least a portion of the intersecting duct element is passed through and is enclosed by the main duct element.

Ducts are employed in a great number of applications, including the transport of fluids. The term duct should be understood here to refer to any elongated hollow space suitable for transporting fluids, including pipelines and air ducts, but it should be noted that the term duct may also cover elongated hollow spaces for conveying fixed installations such as cables.

The invention is particularly suited for use in ventilation ducts, and more specifically for installation or upgrading of duct systems for ventilation in buildings.

When the need arises to have two ducts in the same plane intersecting each other, the problem of collision clearly arises. The most obvious and well-used method of arranging for two such ducts to intersect is to pass one of the ducts in an arc round the other. This solution entails extra space requirements, and affects the flow conditions in the duct which is passed in an arc round the other.

The requirement for extra space represents a substantial problem in the installation of new duct systems in existing buildings, and particularly in the installation of ventilation ducts, where the ducts have a sizeable diameter. Thus the intersection of ducts in the traditional manner often results in a substantial reduction in effective headroom and/or cubic capacity, or it entails aesthetic drawbacks at variance with architectural requirements.

A previously known solution to the above-mentioned problem is disclosed in Swedish patent publication SE-C2-502.376. This publication describes intersecting elements which can be used in pairs, where a pair of such elements together form a junction whose height is no greater than that of the duct itself. This is achieved by a variation in the cross section along the intersecting element, with the result that the cross sectional height is substantially halved where the two elements intersect. This embodiment provides good utilisation of space. but it has the disadvantage that the flow conditions in each of the ducts are greatly affected, as narrow passages are created which constitute a considerable restriction in the fluid flow through both ducts.

Swedish laid-open patent application SE-B-384.076 describe a pipe distributor. The publication discloses a first pipe which is passed through a second pipe, but the first pipe's external cross section does not appear to be specially designed with regard to the flow conditions in the second pipe.

Norwegian laid-open patent application NO-B-125.480 also discloses a pipe distributor, particularly suited to central heating systems. The publication applies particularly to the method of manufacturing such a pipe distributor. In this case too a first pipe is indicated which is passed through a second pipe. but here too it does not appear that the first pipe's external cross section is specially designed with regard to the flow conditions in the second pipe.

The article *Rehabilitation of ventilation plants - in terms of architecture!* by B.T. Larsen, published in the periodical "Byggherren" no. 4-98, p. 48-50, describes and illustrates ventilation ducts where an intersecting branch is passed through a main branch in a duct junction. The article indicates briefly and without going into more detail that the junction is designed in a streamlined form in order to reduce the pressure loss in the main branch, and that it is equipped with a measuring tap for measuring the air volume in the intersecting branch.

This article therefore does not propose a duct junction where the main branch is specifically used for flow-through in one direction, and where the intersecting branch is given a specific design which is adapted to one-way flow-through in the main branch. US 3510156 A discloses a main duct having inner and outer walls, thereby defining a ring-shaped cross section, enclosing an inner space wherein a second duct transporting fluid is arranged, and providing a space between the outer and the inner wall also for transporting fluid. With this pronounced design, the shape of the inner wall of the main duct corresponds to the shape of the outer wall of the second duct.

Thus there is a need to provide a solution for the intersection of two or more ducts in the same plane, with a main branch and one or more intersecting branches, where the main branch is used for fluid flow-through substantially in one direction, where the design of the intersecting branch or intersecting branches is adapted to the substantially one-way fluid flow-through in the main branch, with the result that the pressure loss in the main branch is as low as possible.

This is achieved according to the invention with a device as mentioned in the introduction, where the portion of the intersecting duct element which is passed through and is enclosed by the main duct element is adapted to the fluid flow-through in the main duct element, the portion on its own or together with any profile elements mounted thereon having an external cross section with a first, rounded end upstream of the fluid flow-through and a second end which is more pointed than the first, rounded end downstream of the fluid flow-through.

Further advantages are achieved with the embodiments as stated in the dependent claims.

The invention will now be described in greater detail with reference to the attached drawings, in which:
fig. 1 is an elevational view of a first, preferred embodiment of the invention where a main duct element and an intersecting duct element form a junction,
fig. 2 is a sectional elevation of the embodiment in fig. 1,
fig. 3 is an elevational view of an alternative embodiment where a main duct element and an intersecting duct element form a junction, and where the intersecting duct element is divided into two separate channels, and
fig. 4 is a sectional elevation of the embodiment in fig. 3.

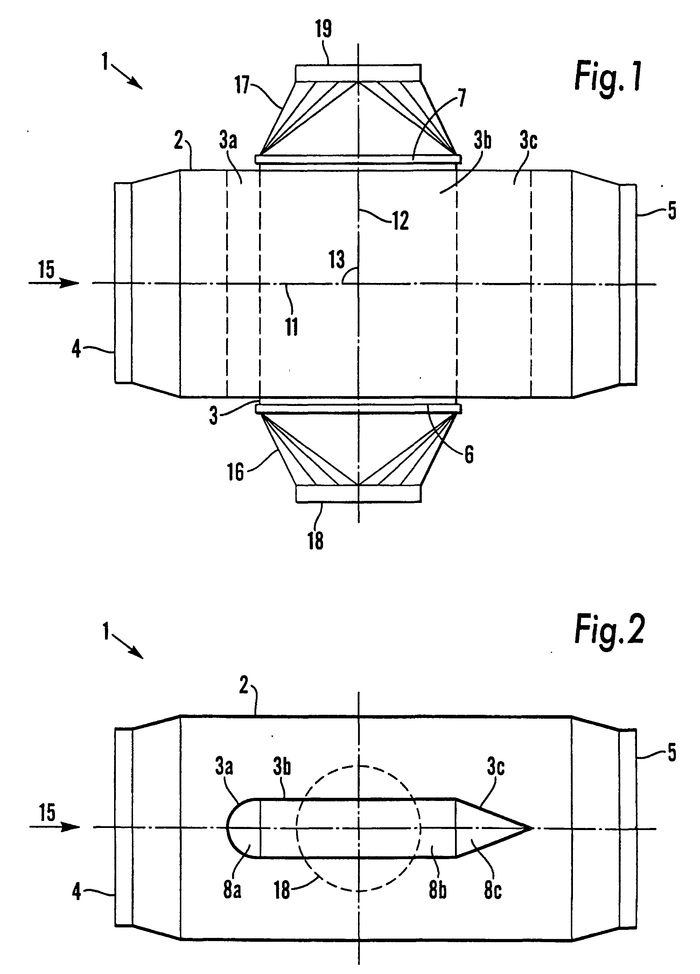

A preferred embodiment in figures 1 and 2 illustrates the device 1, consisting of a main duct element 2 with openings indicated by 4 and 5, and an intersecting duct element 3 with openings indicated by 6 and 7. The main duct element is of a type which is employed for fluid flow-through in a direction indicated by the arrow 15.

In this embodiment the main duct element 2 forms part of a ventilation duct which is used for the flow-through of air. Within the scope of the invention, however, the main duct element 2 may equally well be used for the flow-through of another fluid, i.e. a liquid or gas or a combination thereof.

In principle the intersecting duct element can be used in an arbitrary manner, but in this preferred embodiment this duct element is also a part of a ventilation duct, intended for the flow-through of air. The intersecting duct element 3, however, can equally well be used for transport of another fluid. or it can be used for conveying installations such as cables. In the preferred embodiment in figs. 1 and 2 the intersecting duct element consists of a single channel, but it may be divided into or contain a plurality of separate channels.

The two duct elements form a junction, the intersecting duct element 3 being passed through the main duct element 2. The axes 11 and 12 of the main duct element and the intersecting duct element respectively form an angle 13 which in this embodiment is 90°. Other intersecting angles, especially between 10° and 170 °, may also be relevant, and will also be covered by the invention.

The portion of the intersecting duct element 3 which is enclosed by the main duct element 2 is designated by 3b. In the preferred embodiment in figs. 1 and 2 the portion 3b is designed with a rectangular cross section 8b with a height substantially less than the height of the main duct element 2. On to the portion is mounted an upstream profile element 3a with a rounded cross section 8a and a downstream profile element 3c with a more pointed cross section 8c. The portion 3b and the profile elements 3a, 3c mounted thereon together have an external cross section 8 which is adapted to the fluid flow-through 15 in the main duct element. In this embodiment the cross section 8 is the same along the whole length of the duct element. However, the cross section may vary slightly along the duct element within the scope of the invention.

It is an advantage, but not necessary, for the main duct element to have a slightly larger cross section in the portion which encloses the intersecting duct element. Such an enlarged cross section limits the restriction represented by the intersecting duct element of the fluid flow-through in the main duct element.

In an alternative, non-illustrated embodiment, the actual portion 3b of the intersecting duct element 3 is designed with a flow-adapted cross section 8, with the result that there is no need to mount profile elements.

In the preferred embodiment according to figures 1 and 2 the cross section 8 is designed in such a manner that the first, rounded end 8a of the cross section is in the form of a semicircle. The upstream profile element 3a will thereby be in the form of a half. regular cylinder. Alternatively, the rounded end 8a of the cross section 8 may be in the form of a part of a semicircle or a part of a parabola, or another rounded shape.

In the same preferred embodiment according to figs. 1 and 2 the cross section 8 is designed in such a manner that the second, more pointed end 8c is in the form of an isosceles pointed triangle. The downstream profile element 3c will thereby be in the form of an edge, with two straight surfaces which meet at an angle which is preferably less than 90°. Other designs of the more pointed end 8c of the cross section 8, which form a tapering, sharp or more pointed rounded edge at the end of the portion 3b, are also possible.

In this embodiment the intermediate part 8b of the cross section 8. between the rounded end 8a and the more pointed end 8c are identical with the cross section of the portion 3b of the intersecting duct element, and is in the form of a rectangle. It may have a different shape, substantially parallel in the longitudinal direction or a taperingly straight or curved shape. If the portion 3b is not equipped with profile elements, but is designed alone with a flow-adapted cross section 8, a further alternative is to omit the intermediate part 8b of the cross section 8, with the result that the cross section of the portion 3b can only be described as having a rounded end 8a and a more pointed end 8c.

With a cross section 8 designed according to the invention, the essentially one-way fluid flow-through 15 will be relatively little affected by the restriction represented by the second. intersecting duct element 3, while at the same time the two duct elements intersect with minimal space requirements, and in the same plane.

In the embodiment in figs. 1 and 2 the intersecting duct element 3 is provided at its openings 6, 7 with transition elements 16, 17, one end of which is designed with a cross section which provides a secure connection with the duct element 3, i.e. in this case a rectangular cross section. At the other end the transition element is designed with a different cross section, in this case a circular cross section. Each transition element 16, 17 is permanently attached to the duct element 3.

In a second, non-illustrated embodiment, the intersecting duct element has a first cross section along the portion 3b which is confined in the main duct element, and one or more other cross sections along parts which are not confined in the main duct element. In such an embodiment the intersecting duct element is designed with a rectangular cross section along the portion 3b, while at its openings 6. 7 it has a circular cross section which is directly adapted to flange or coupling devices 18, 19. In this embodiment the transition elements 16, 17 are superfluous.

Each duct element may be equipped at its openings with flange or coupling devices for connection to an external duct element. In the embodiment in figs. 1-2, the main duct element 2 has such flange or coupling devices 4, 5.

In a similar manner the transition elements 16, 17 may also be equipped with flange or coupling devices 18, 19 for connection to an external duct element.

The said flange or coupling devices 4, 5, 16, 17 are preferably designed to adapt the device to standardised, external duct elements. In a preferred embodiment according to that which is illustrated in figs. 1 and 2, the flange or coupling devices 4, 5 for the main duct element are adapted to standard ventilation ducts with a diameter of 500 mm. The flange or coupling devices 18, 19 for the transition elements 16. 7 which are associated with the intersecting duct element 3 are adapted to standard ventilation ducts with a diameter of 315 mm.

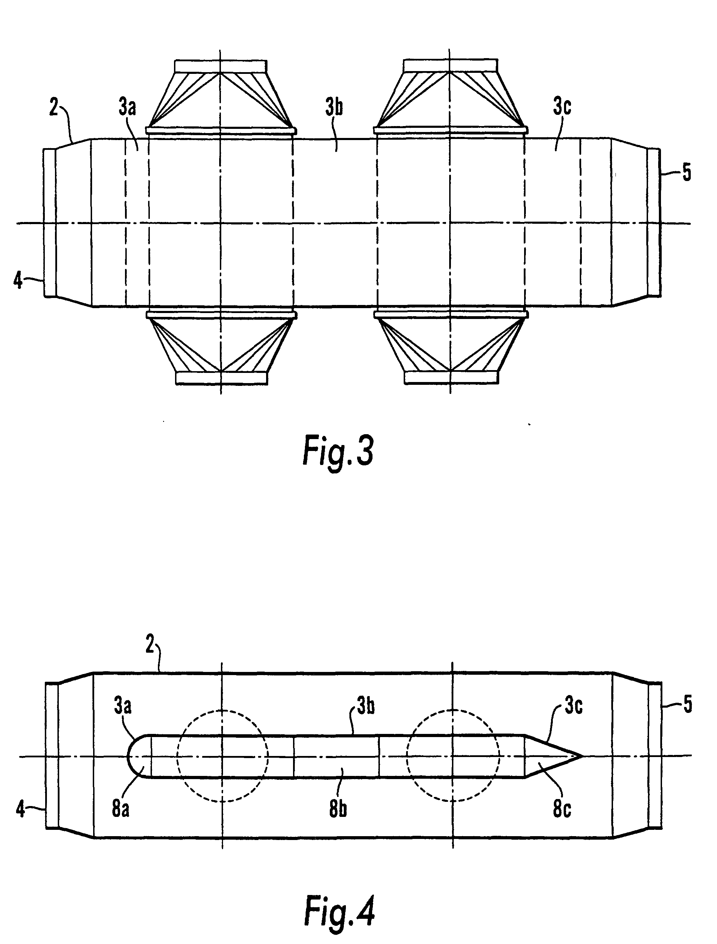

The alternative embodiment in figs. 3 and 4 also illustrates a device for forming a junction between a main duct element 2 and an intersecting duct element 3. This differs from the embodiment in figs. 1 and 2 in that the intersecting duct element 3 is divided into two separate channels. In the same way as in the embodiment in figs. 1 and 2. on to the portion 3b of the intersecting duct element 3. which is enclosed by the main duct element 2, there are mounted flow-adapted profile elements 3a, 3c. The intermediate part 3b of the duct element is divided into two channels, the duct element having additional vertical walls. Alternatively, the two channels could be contained as separate, individual duct elements, e.g. pipes, inside the intersecting duct element 3.

The two channels are each provided at their openings with transition elements 16, 17 and flange/coupling devices 18, 19 for connection to external duct elements.

In the embodiment in figs. 3 and 4. the portion 3b of the intersecting duct element 3 represents one single, flow-adapted restriction for the fluid flow-through 15 in the main duct element 2. This gives less pressure loss and flow reduction in the main duct element than would be the case if the two channels were passed through the main duct element separately, in separate duct elements.

In an alternative embodiment which is not illustrated in the figures, the device 1 is equipped with sensor devices for measuring pressure or flow conditions inside the main duct element. The sensor devices are arranged on or in connection with the portion 3b of the intersecting duct element 3 which is enclosed by the main duct element 2. By arranging the sensor devices in this manner, the advantage is obtained that the restriction represented by the intersecting duct element 3 despite its flow-adapted shape 8 is exploited as a pressure restriction in a pressure drop-based measuring arrangement.

If required, the device may alternatively or additionally be equipped with sensor devices for measuring pressure or flow conditions inside the intersecting duct element. Such sensor devices are preferably arranged on both sides of the portion 3b of the intersecting duct element 3 which is enclosed by the main duct element 2. The advantage is thereby obtained that the restriction represented by the narrowing of the intersecting duct element's shape is exploited as a pressure restriction in a pressure drop-based measuring arrangement.

In a second, alternative embodiment which is also not illustrated in the figures, the device 1 is equipped with at least one damper or choke device for influencing the pressure or flow conditions in the main duct element 2. The damper or choke devices are arranged on or in connection with the portion 3b of the intersecting duct element 3 which is enclosed by the main duct element 2, thus exploiting the intersecting duct element 3 as a support for the damper/choke device. A special embodiment of this type needs to be based on an embodiment such as that illustrated in figs. 1 and 2, and possibly 3 and 4, where the more pointed part 8c of the cross section 8 constitutes a triangle, with the result that the downstream part of the portion 3b is in the form of an edge with this triangular cross section 8c. A damper/choke device of this kind consists of two flat dampers, mounted and rotatably hinged at the transition between the pointed part of the portion and the rest of the portion 3b. It is designed with drive means to effect rotation from an open position, where the plates abut against the pointed part of the portion 3b which forms the edge, to a closed position, where the dampers more or less close off fluid flow through the main duct element 2. The drive means for rotating the dampers are designed in a known per se manner, manually via mechanical wheels or stays, or electrically or pneumatically via suitable actuators.

Further embodiments, variations and modifications which are obvious to a person skilled in the art are also covered by the invention, as it is defined in the following patent claims.

## Claims

1. A device (1) for forming a junction between a main duct and an intersecting duct, comprising a main duct element (2) and an intersecting duct element (3), the main duct element being used for fluid flow substantially in one direction, and at least a portion (3b) of the intersecting duct element (3) being passed through and enclosed by the main duct element (2),
**characterized in that** the portion (3b) of the intersecting duct element is adapted to the fluid flow (15) in the main duct element (2), the portion (3b) either on its own or together with any profile elements (3a, 3c) mounted thereon having an external cross section (8) which has a first, rounded end (8a) upstream of the fluid flow-through (15) and a second end (8c) which is more pointed than the first, rounded end (8a) downstream of the fluid flow-through (15), and the fluid flow (15) being in direct contact with the outside surface of the intersecting duct enclosed by the main duct element.

2. A device according to claim 1,
**characterized in that** the intersecting duct element (3) comprises a single channel.

3. A device according to claim 1,
**characterized in that** intersecting duct element (3) comprises a plurality of channels.

4. A device according to claims 1-3,
**characterized in that** the intersecting duct element (3) has a regular, preferably rectangular cross section, and that on the intersecting duct element (3) on the portion (3b) which is enclosed by the main duct element (2) there is mounted a first, upstream, rounded profile element (3 a) and a second, downstream, more pointed profile element (3c).

5. A device according to claims 1-4,
**characterized in that** the main duct element and/or the channels are equipped on at least one of their openings with a transition element (16, 17) for adaptation to the cross section and the dimensions of an external duct element.

6. A device according to claims 1-5,
**characterized in that** the main duct element (2), the channels and/or the transition elements are equipped on at least one of their openings with a flange or coupling device for connection to an external duct element.

7. A device according to claims 1-6,
**characterized in that** the angle (13) between the axis (11) of the first duct element (2) and the axis (12) of the intersecting duct element (3) is in the range 10° to 170°, and preferably 90°.

8. A device according to claims 1-7,
**characterized in that** the main duct element (2) also contains at least one sensor device, arranged on or in connection with the portion (3b) of the intersecting duct element (3) which is enclosed by the main duct element (2), for measuring the pressure or flow conditions in the main duct element.

9. A device according to claims 1-8,
**characterized in that** the intersecting element (2) also contains at least one sensor device, arranged in connection with the portion (3b) of the intersecting duct element (3) which is enclosed by the main duct element (2), for measuring the pressure or flow conditions in the intersecting duct element.

10. A device according to claims 1-9,
**characterized in that** the main duct element (2) also contains at least one damper/choke device, arranged on or in connection with the portion (3b) of the intersecting duct element (3) which is enclosed by the main duct element (2), for influencing the pressure or flow conditions in the main duct element.

## Patentansprüche

1. Vorrichtung (1) zum Bilden einer Verbindung zwischen einer Hauptleitung und einer sich damit kreuzenden Leitung mit einem Hauptleitungselement (2) und einem kreuzenden Leitungselement (3), wobei das Hauptleitungselement im wesentlichen für einen Fluidfluß in eine Richtung verwendet wird, und wobei mindestens ein Abschnitt (3b) des kreuzenden Leitungselementes (3) durch das Hauptleitungselement (2) geführt ist und von demselben umschlossen ist,
**dadurch gekennzeichnet,**
**daß** der Abschnitt (3b) des kreuzenden Leitungselementes an den Fluidfluß (15) in dem Hauptleitungselement (2) angepaßt ist, wobei der Abschnitt (3b) entweder alleine oder zusammen mit irgendwelchen darauf angebrachten Profilelementen (3a, 3c) einen äußeren Querschnitt (8) aufweist, der ein erstes abgerundetes Ende (8a) entgegen der Strömungsrichtung des Fluiddurchflusses (15) und ein zweites Ende (8c) aufweist, das spitzer ist als das erste abgerundete Ende (8a) in Strömungsrichtung des Fluiddurchflusses (15), und wobei der Fluidfluß (15) in direktem Kontakt mit der äußeren Oberfläche der kreuzenden Leitung steht, die von dem Hauptleitungselement umschlossen ist.

2. Vorrichtung nach Anspruch 1, **dadurch gekennzeichnet, daß** das kreuzenden Leitungselement (3) einen einzelnen Kanal aufweist.

3. Vorrichtung nach Anspruch 1, **dadurch gekennzeichnet, daß** das kreuzende Leitungselement (3) mehrere Kanäle aufweist.

4. Vorrichtung nach einem der Ansprüche 1 bis 3, **dadurch gekennzeichnet, daß** das kreuzende Leitungselement (3) einen gleichmäßigen, vorzugsweise rechteckigen Querschnitt aufweist und daß an dem kreuzenden Leitungselement (3) auf dem Abschnitt (3b), der von dem Hauptleitungselement (2) umschlossen ist, ein erstes entgegen der Strömungsrichtung abgerundetes Profilelement (3a) und ein zweites spitzeres Profilelement (3c) in Strömungsrichtung angebracht ist.

5. Vorrichtung nach einem der Ansprüche 1 bis 4, **dadurch gekennzeichnet daß** das Hauptleitungselement und/oder die Kanäle an mindestens einer der Öffnungen von diesen mit einem Überleitungselement (16, 17) zum Anpassen an den Querschnitt und die Abmessungen eines äußeren Leitungselementes ausgestattet sind.

6. Vorrichtung nach einem der Ansprüche 1 bis 5, **dadurch gekennzeichnet, daß** das Hauptleitungselement (2), die Kanäle und/oder die Überleitungselemente an mindestens einer der Öffnungen von diesen mit einem Flansch oder einer Kupplungsvorrichtung zum Verbinden mit einem externen Leitungselement ausgestattet sind.

7. Vorrichtung nach einem der Ansprüche 1 bis 6, **dadurch gekennzeichnet, daß** der Winkel (13) zwischen der Achse (11) des ersten Leitungselementes (2) und der Achse (12) des kreuzenden Leitungselementes (3) zwischen 10° und 170° liegt und vorzugsweise 90° beträgt.

8. Vorrichtung nach einem der Ansprüche 1 bis 7, **dadurch gekennzeichnet, daß** das Hauptleitungselement (2) auch mindestens eine Sensoreinrichtung aufweist, die auf oder verbunden mit dem Abschnitt (3b) des kreuzenden Leitungselementes (3), das von dem Hauptleitungselement (2) umschlossen ist, zum Messen des Druckes oder der Strömungsverhältnisse in dem Hauptleitungselement angebracht ist.

9. Vorrichtung nach einem der Ansprüche 1 bis 8, **dadurch gekennzeichnet, daß** das kreuzende Element (2) auch mindestens eine Sensoreinrichtung aufweist, die verbunden mit dem Abschnitt (3b) des kreuzenden Leitungselementes (3), das von dem Hauptleitungselement (2) umschlossen ist, zum Messen des Druckes oder der Strömungsverhältnisse in dem kreuzenden Leitungselement angebracht ist.

10. Vorrichtung nach einem der Ansprüche 1 bis 9, **dadurch gekennzeichnet, daß** das Hauptleitungselement (2) auch mindest eine Dämpfungs-/Drosselvorrichtung aufweist, die auf oder verbunden mit dem Abschnitt (3b) des kreuzenden Leitungselementes (3), das von dem Hauptleitungselement (2) umschlossen ist, zum Beeinflussen des Druckes oder der Strömungsverhältnisse in dem Hauptleitungselement angebracht ist.

## Revendications

1. Dispositif (1) pour former une jonction entre une conduite principale et une conduite de croisement, comprenant un élément de conduite principale (2) et un élément de conduite de croisement (3), l'élément de conduite principale étant utilisé pour que le liquide s'écoule sensiblement dans une direction, et au moins une partie (3b) de l'élément de conduite de croisement (3) passant à travers et étant enfermé par l'élément de conduite principale (2),
**caractérisé en ce que** la partie (3b) de l'élément de conduite de croisement est adapté pour l'écoulement du liquide (15) dans l'élément de conduite principale (2), la partie (3b) soit elle-même ou avec des éléments de profil (3a, 3c) montés sur celle-ci dotés d'une section transversale externe (8) qui a une première extrémité arrondie (8a) en amont de l'écoulement du liquide (15) et une seconde extrémité (8c) qui est plus pointue que la première extrémité arrondie (8a) en aval de l'écoulement de liquide (15), et l'écoulement de liquide (15) étant en contact direct avec la surface extérieure de la conduite de croisement enfermée par l'élément de conduite principale.

2. Dispositif selon la revendication 1,
**caractérisé en ce que** l'élément de conduite de croisement (3) comprend un seul canal.

3. Dispositif selon la revendication 1,
**caractérisé en ce que** l'élément de conduite de croisement (3) comprend une pluralité de canaux.

4. Dispositif selon les revendications 1-3, **caractérisé en ce que** l'élément de conduite de croisement (3) a une section transversale régulière de préférence rectangulaire, et **en ce que** sur l'élément de conduite de croisement (3) sur la partie (3b) qui est enfermée par l'élément de conduite principale (2), on monte un premier élément de profil arrondi en amont (3a), et un second élément de profil plus pointu en aval (3c).

5. Dispositif selon les revendications 1-4, **caractérisé en ce que** l'élément de conduite principale et/ou les canaux sont équipés sur au moins l'une de leurs ouvertures avec un élément de transition (16, 17) pour l'adaptation à la section transversale et aux dimensions d'un élément de conduite externe.

6. Dispositif selon les revendications 1-5, caractérisé en ce l'élément de conduite principale (2), les canaux et/ou les éléments de transition sont équipés sur au moins l'une de leurs ouvertures d'un rebord ou dispositif de couplage pour le raccordement avec un élément de conduite externe.

7. Dispositif selon les revendications 1-6, **caractérisé en ce que** l'angle (13) entre l'axe (11) du premier élément de conduite (2) et l'axe (12) de l'élément de conduite de croisement (3) est compris entre 10° et 170°, et de préférence 90°.

8. Dispositif selon les revendications 1-7, **caractérisé en ce que** l'élément de conduite principale (2) contient également au moins un dispositif de capteur, agencé sur ou en connexion avec la partie (3b) de l'élément de conduite de croisement (3) qui est enfermé par l'élément de conduite principale (2), pour mesurer la pression ou les conditions d'écoulement dans l'élément de conduite principale.

9. Dispositif selon les revendications 1-8,
**caractérisé en ce que** l'élément de croisement (2) contient également au moins un dispositif de capteur, agencé en connexion avec la partie (3b) de l'élément de conduite de croisement (3) qui est enfermé par l'élément de conduite principale (2), pour mesurer la pression ou les conditions d'écoulement dans l'élément de conduite de croisement.

10. Dispositif selon les revendications 1-9, **caractérisé en ce que** l'élément de conduite principale (2) contient également au moins un dispositif de registre/étrangleur, agencé sur ou en connexion avec la partie (3b) de l'élément de conduite de croisement (3) qui est enfermé par l'élément de conduite principale (2), pour influencer la pression ou les conditions d'écoulement dans l'élément de conduite principale.
